# EUROPÄISCHE PATENTSCHRIFT

(11) **EP 3 595 917 B1**
(45) Veröffentlichungstag und Bekanntmachung des Hinweises auf die Patenterteilung: **10.03.2021**
(21) Anmeldenummer: 18702147.2
(22) Anmeldetag: 18.01.2018
(51) Int. Cl.: B60C 11/24, B60C 23/00, B60C 23/04, B60C 23/06, G01M 17/02

(54) **CRAWLER**
CRAWLER
CRAWLER

(30) Priorität: 14.03.2017 DE 102017204172
(43) Veröffentlichungstag der Anmeldung: 22.01.2020
(73) Patentinhaber: Continental Reifen Deutschland GmbH, 30165 Hannover (DE)
(72) Erfinder: LEHMANN, Jörg, 30453 Hannover (DE); KÖHLER, Thorsten, 93180 Deuerling (DE); EGLSEDER, Karl-Heinz, 93142 Maxhütte (DE)
(74) Vertreter: Continental Corporation
(86) Internationale Anmeldenummer: PCT/EP2018/051149
(87) Internationale Veröffentlichungsnummer: WO 2018/166675

(56) Entgegenhaltungen:
- EP-A1- 2 727 751
- CN-U- 204 507 054
- US-A1- 2009 120 215

## Beschreibung

Die Erfindung betrifft einen Crawler zum Erfassen und Ermitteln von Zustandsparametern bzw. Zustandsdaten von auf einem Fahrzeug montierten Fahrzeugreifen.

Für eine lange Lebensdauer von Fahrzeugreifen, insbesondere Fahrzeugluftreifen auf allen Arten von Fahrzeugen, ist es notwendig, die Reifen instand zu halten und regelmäßig ihren Zustand zu überprüfen, indem vor allem der Reifeninnendruck, die aktuelle Profiltiefe, der Zustand der fahrzeugaußenseitigen Seitenwand und auch die Regelmäßigkeit des Abriebs des Laufstreifens kontrolliert werden. Bei dieser Kontrolle können auch Beschädigungen am Fahrzeugreifen festgestellt werden. Die Kontrolle des Zustandes von Reifen auf Fahrzeugen, die zu einer Fahrzeugflotte bzw. einem Fuhrpark gehören, ist mit einem erheblichen Zeit- und Personalaufwand verbunden. Die mit der Reifenkontrolle beauftragte Person geht dabei von Fahrzeug zu Fahrzeug, überprüft manuell den Reifeninnendruck, misst meist auch manuell die Profiltiefe und führt eine Sichtkontrolle durch.

Es ist bekannt und üblich, Crawler zur Inspektion von Pipelines einzusetzen. Verwendet werden dazu zwei Typen von Crawler, solche, die entlang der Innenseite der Pipeline fahren, wobei der Transport der Flüssigkeit unterbrochen werden muss, und solche, welche entlang der Außenseite der Pipeline Inspektionsfahrten durchzuführen. Ein Crawler des zweiten Typs ist beispielsweise aus der US 7,594,448 B2 bekannt. Dieser Crawler weist ein Fahrgestell mit vier Rädern, ein Antriebssystem und eine elektronische Einheit mit verschiedenen, auf den Einsatzzweck abgestimmten Komponenten auf.
Die EP 2 727 751 A1, US 2009/120215 A1 und CN 204 507 054 U offenbaren weitere Vorrichtungen mit denen Reifenzustände untersucht werden können.

Der Erfindung liegt die Aufgabe zugrunde, einen Crawler zur Erfassung und Ermittlung des aktuellen Zustandes von auf Fahrzeugen montierten Fahrzeugreifen zur Verfügung zu stellen, welcher den Zeit- und Personalaufwand zur Inspektion der Fahrzeugreifen wesentlich verringert.

Gelöst wird die gestellte Aufgabe erfindungsgemäß mit einem Crawler mit
- einem Fahrgestell mit mindestens zwei Achsen und mindestens drei Rädern oder mit einem Ketten-bzw. Raupenlaufwerk,
- einem Antriebssystem mit mindestens einem Elektromotor und einem wieder aufladbaren Akkupack,
- einer elektronischen Fahrzeugsteuerung,
- einer Kommunikationseinheit zum Empfangen von Daten von einem Backend und zur Übertragung von Daten zum Backend,
- einer Sensorik mit Empfängern zum Empfangen von Daten aus im Reifen verbauten Sensoren und mit Sensoren zur Erfassung von Zustandsparametern an der Außenseite des Reifens.

Der erfindungsgemäße Crawler übernimmt daher die Aufgaben der ansonsten erforderlichen Kontrollperson, senkt somit deutlich die Kosten, führt verlässlich die vorgesehenen Überprüfungen durch und erhöht dadurch die Dokumentationssicherheit. Der Crawler gestattet es zudem, Kontrollen in beliebigen Zeitintervallen und zu beliebigen Zeitpunkten durchzuführen.

Bei einer möglichen Ausführungsform des erfindungsgemäßen Crawlers ist dieser für eine Bewegung und Steuerung mittels Fernsteuerung ausgestattet. Fernsteuerungssysteme, die in Frage kommen, sind an sich bekannt, beispielsweise zur Fernsteuerung von Modellflugzeugen oder Modellautos.

Bei einer weiteren erfindungsgemäßen Ausführung des Crawlers ist dieser für eine Bewegung und Steuerung mittels FPV (First Person View) ausgestattet. Auch solche Steuerungssysteme sind, beispielsweise in RC-Modellbau für Autos, Flugzeuge, Hubschrauber und dergleichen, üblich. Die Ich-Perspektive wird dabei durch eine am Crawler befindliche Kamera erreicht, deren Signale über einen Sender an einen Empfänger zum RC-Piloten gesendet werden. Die Signale werden entsprechend umgewandelt und die Bilder der Kamera in Echtzeit, beispielsweise auf einen Monitor oder über eine Videobrille, dargestellt.

Bei einer weiteren vorteilhaften Ausführungsform ist der Crawler mit einer Einheit zur genauen Ortsbestimmung versehen, insbesondere um eine automatische Bewegung anhand von in der Fahrzeugsteuerung abgespeicherten oder im Betrieb empfangenen Ortsdaten durchzuführen.

Die Einheit zur genauen Ortsbestimmung kann auf unterschiedliche, ebenfalls in an sich bekannte Weise, eine Ortsbestimmung durchführen, beispielweise mittels GPS, insbesondere differential-GPS. Die Ortung kann ferner mittels Laser, Radar oder Kamerasensoren oder spezieller Sendeeinheiten, die mit der UWB-Technologie oder der BNE-Technologie arbeiten, erfolgen.

Die Kommunikationseinheit des erfindungsgemäßen Crawlers steht mit dem Backend - der Zentrale bzw. dem Operator - in Verbindung, wobei diese Verbindung eine Funkverbindung sein kann oder über WIFI, Bluetooth, LORA oder Mobilfunk erfolgen kann.

Der erfindungsgemäße Crawler soll vor allem in der Lage sein, die zur Überwachung und Kontrolle des Reifenzustandes wesentlichen Daten bzw. Parameter zu erfassen und abzuspeichern, zu verarbeiten und/oder zu übermitteln. Der Crawler ist daher mit einer Sensorik ausgestattet, zu welcher zumindest eine Kamera mit Bildsensoren gehört, insbesondere um eine äußere Sichtkontrolle der Reifen zu ermöglichen, entsprechende Aufnahmen zu erstellen und an das Backend zu übermitteln oder abzuspeichern. Zur Feststellung der aktuellen Profiltiefe des jeweiligen Fahrzeugreifens weist die Sensorik zumindest einen Profiltiefensensor auf. Darüber hinaus kann die Sensorik als Empfänger zumindest einen RFID-Reader zum Einlesen von Daten eines im Reifen eingebauten RFID-Transponders aufweisen. Diese Daten erlauben beispielsweise eine eindeutige Zuordnung von Reifen und Fahrzeug. Sind in den zu kontrollierenden Reifen Innendrucksensoren verbaut, ist es vorteilhaft, wenn die Sensorik auch einen Empfänger zum Einlesen der Daten der Innendrucksensoren aufweist.

Darüber hinaus kann die Sensorik Sensoren zur Umfelderkennung, beispielweise zumindest eine Kamera, ein Ultraschallsystem oder ein Radarsystem, aufweisen. Auf diese Weise kann eine Fahrwegserkennung durchgeführt werden oder es können Hindernisse erkannt und umfahren werden.

Der erfindungsgemäße Crawler kann weiter mit einer Signalverarbeitungseinheit ausgestattet sein, die die von den diversen Sensoren der Sensorik erfassten und gespeicherten Daten bereits on-board auswertet.

Um Unfälle mit Personen oder anderen Fahrzeugen zu vermeiden, ist es vorteilhaft, wenn der Crawler mit zumindest einer optischen und/oder zumindest einer akustischen Warneinrichtung ausgestattet ist.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Ansicht einer Ausführung eines Crawlers gemäß der Erfindung und
Fig. 2 eine Draufsicht auf den Crawler ohne Aufbauten.

Der Crawler gemäß der Erfindung ist dafür vorgesehen und ausgestattet, den Zustand von Reifen an Kraftfahrzeugen eines Fuhrparks oder einer Fahrzeugflotte, beispielsweise eines Fuhrparks von Organisationen, Unternehmen, Behörden oder militärischen Einheiten, zu kontrollieren und zu erfassen. Dabei sollen vor allem der Reifeninnendruck, die Profiltiefe, vorzugsweise auch der äußere Zustand der Seitenwand und das Abriebbild des Laufstreifens des Reifens, ob regelmäßig oder unregelmäßig, sowie etwaige Beschädigungen an der Außenseite der Reifen festgestellt werden können.

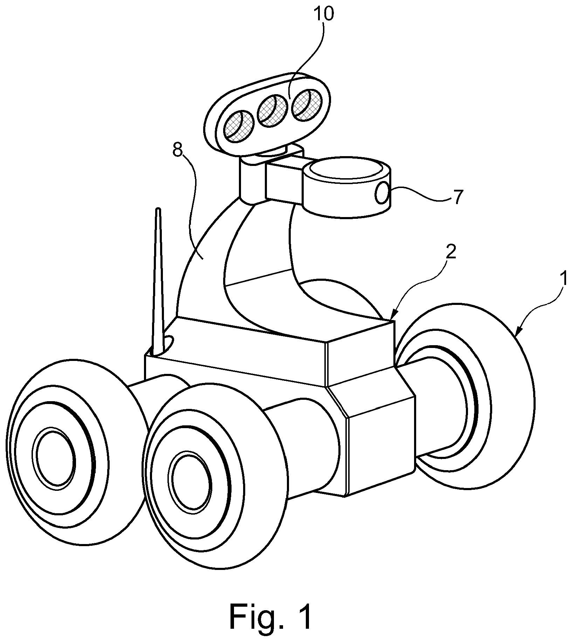

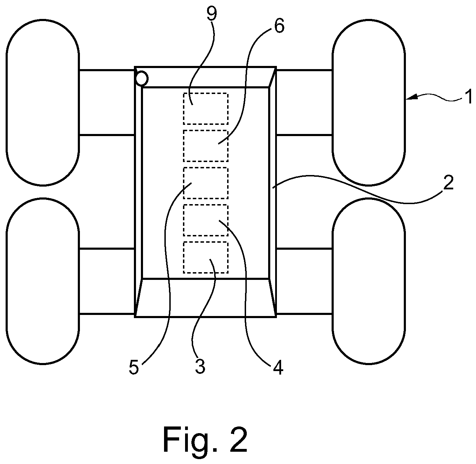

Der in Fig. 1 lediglich schematisch und beispielhaft dargestellte Crawler weist ein Fahrgestell mit im Ausführungsbeispiel zwei Achsen und vier Rädern 1 auf. Der Crawler kann jedoch auch mehr als zwei Achsen, beispielweise drei Achsen und daher sechs Räder aufweisen. Möglich sind auch Ausführungen mit zwei Achsen und drei Rädern oder mit einem Ketten- bzw. Raupenlaufwerk. Das Fahrgestell, welches derart ausgeführt ist, dass der Crawler lenkbar ist und Kurven fahren kann, trägt ein Gehäuse 2, in welchem wesentliche Komponenten des Crawlers untergebracht sind, die in Fig. 2 schematisch angedeutet sind. Zu diesen Komponenten gehört ein Antriebssystem 3 mit einem oder mehreren Elektromotor(en) zum Durchführen der Fahrbewegungen des Crawlers, insbesondere zum Vorwärtsfahren, Rückwärtsfahren und Kurvenfahren, sowie zum Betätigen der Lenkung. Zur Energieversorgung ist ein aufladbarer Akkupack vorgesehen. Eine weitere Komponente ist eine elektronische Fahrzeugsteuerung 4, mittels welcher der Crawler automatisch und/oder ferngesteuert bewegt werden kann. Für eine etwaige Fernsteuerung kann der Crawler beispielsweise auf Sicht mittels eines Senders von einem Operator von Hand gesteuert werden. Zusätzlich oder alternativ kann vorgesehen sein, dass der Crawler mittels FPV (First Person View) gesteuert wird. Dabei werden in Echtzeit Analogsignale von einer am Crawler angebrachten Kamera zum Operator übertragen und auf einem Monitor, beispielweise an einem Notebook oder in einer Videobrille, dargestellt so dass der Operator den Crawler direkt steuern kann.

Bei einer automatischen Operation des Crawlers werden auf eine Recheneinheit in der Fahrzeugsteuerung 4 Wegpunkte gespeichert, die der Crawler abfährt. Dabei kann vorgesehen sein, dass der Crawler an bestimmten Wegpunkten eine definierte Zeit, beispielsweise 1 bis 2 Minuten, in Warteposition bleibt, um etwa Kontrollmessungen durchzuführen oder um mittels einer am Crawler montierten Kamera gezielt nach Objekten zu suchen. Die für die automatische Operation erforderliche Einheit zur genauen Ortsbestimmung befindet sich insbesondere in der Fahrzeugsteuerung 4 und kann über GPS, insbesondere differential-GPS, durch Ortung bzw. Vermessung mittels Laser, Radar oder Kamerasensoren oder mittels spezieller Sendeeinheiten unter Verwendung der UWB (Ultrabreitband)-Technologie oder der BLE (Bluetooth Low Energie)-Technologie erfolgen. Anstelle von GPS können andere Satelliten basierte Ortungssysteme verwendet werden.

Eine weitere, elektronische Komponente des Crawlers ist eine Kommunikationseinheit 5, welche insbesondere über eine Funkverbindung, beispielsweise Wifi, Bluetooth, LORA (Long Range Wide Area Network) oder Mobilfunk, mit einem Backend - der insbesondere stationären Operationszentrale - verbunden ist, wo weitere Informationen zur jeweiligen Mission zur Verfügung stehen können. Diese Informationen können zum Beispiel Karten eines Flottenhofs, einer Werkstatthalle und dergleichen sein. Die vorgesehene Funkverbindung dient auch dazu, ermittelte Messdaten zur Auswertung an das Backend zu senden.

Der Crawler verfügt ferner über eine Sensorik 6 mit einer Anzahl von Sensoren und/oder Empfängern für Messsignale bzw. Daten.

Die Sensorik 6 umfasst daher insbesondere zumindest eine Kamera 7 mit Bildsensoren, die sich an einem vorzugsweise höhenverstellbaren und schwenkbaren Aufbau 8 befindet, ferner einen Sensor zur Ermittlung der Profiltiefe des Laufstreifens (Profiltiefensensor). Die Sensorik 6 verfügt ferner über Empfänger, beispielsweise einen RFID-Reader, um aus einem im Reifen verbauten RFID-Transponder Daten zu empfangen, sodass Reifen und Fahrzeug eindeutig zugeordnet werden können, ferner über einen Empfänger zum Empfang der Signale eines im Reifen verbauten Innendrucksensors. Die äußere Sichtkontrolle erfolgt über den/die Bildsensor(en) der Kamera. Die erfassten Daten werden gespeichert und entweder zur Auswertung über die Kommunikationseinheit 5 an das Backend geschickt, und/oder bereits on bord in einer entsprechenden Signalverarbeitungseinheit 9 ausgewertet und bewertet.

Darüber hinaus kann die Sensorik 6 Sensoren zur Umfelderkennung, beispielsweise zumindest eine Kamera, ein Ultraschallsystem oder ein Radar, besitzen, um beispielsweise den Fahrweg zu erkennen oder Hindernisse zu bemerken, ferner eine Warneinrichtung 10, beispielsweise zumindest eine Lampe und/oder einen akustischen Signalgeber. Darüber hinaus kann für den Akkupack eine Ladestation vorgesehen sein, die der Crawler rechtzeitig und selbständig aufsucht. Zum Aufladen des Akkupacks kann der Crawler ferner mit Solarzellen ausgestattet sein. Die vorgesehene Lampe kann auch zum Beleuchten der Reifen verwendet werden, um eine gute Qualität von Bildaufnahmen sicherzustellen.

### Bezugsziffernliste

- 1: ................ Rad
- 2: ................Gehäuse
- 3: ................Antriebssystem
- 4: ................Fahrzeugsteuerung
- 5: ................Kommunikationseinheit
- 6: ................Sensorik
- 7: ................Kamera
- 8: ................Aufbau
- 9: ................Signalverarbeitungseinheit
- 10: ..............Warneinrichtung

## Patentansprüche

1. Crawler zum Erfassen und Ermitteln von Zustandsparametern bzw. Zustandsdaten von auf einem Fahrzeug montierten Fahrzeugreifen, mit
- einem Fahrgestell mit mindestens zwei Achsen und mindestens drei Rädern oder mit einem Ketten- bzw. Raupenlaufwerk,
- einem Antriebssystem (3) mit mindestens einem Elektromotor und einem wieder aufladbaren Akkupack,
- einer elektronischen Fahrzeugsteuerung (4),
- einer Kommunikationseinheit (5) zum Empfangen von Daten von einem Backend und zur Übertragung von Daten zu einem Backend,
- einer Sensorik (6) mit Empfängern zum Empfangen von Daten aus im Reifen verbauten Sensoren und mit Sensoren zur Erfassung von Zustandsparametern an der Außenseite des Reifens.

2. Crawler nach Anspruch 1, ausgestattet für eine Bewegung und Steuerung mittels Fernsteuerung.

3. Crawler nach Anspruch 1 oder 2, ausgestattet für eine Bewegung und Steuerung mittels FVP (First Person View).

4. Crawler nach einem der Ansprüche 1 bis 3, ausgestattet mit einer Einheit zur genauen Ortsbestimmung, insbesondere für eine automatische Bewegung anhand in der Fahrzeugsteuerung (4) abgespeicherter oder im Betrieb empfangener Ortsdaten.

5. Crawler nach Anspruch 4, **gekennzeichnet dadurch, dass** die Einheit zur genauen Ortsbestimmung GPS, insbesondere differential-GPS, Ortung mittels Laser, Radar oder Kamerasensoren oder spezielle Sendeeinheiten, die mit der UWB (Ultrabreitband)-Technologie oder der BLE (Bluetooth Low Energie)-Technologie arbeiten, verwendet.

6. Crawler nach Anspruch 1, **dadurch gekennzeichnet, dass** die Kommunikationseinheit (5) über eine Funkverbindung mit dem Backend in Verbindung ist.

7. Crawler nach Anspruch 1 oder 6, **dadurch gekennzeichnet, dass** die Kommunikationseinheit (5) über Wifi, Bluetooth, LORA oder Mobilfunk mit dem Backend in Verbindung ist.

8. Crawler nach Anspruch 1, **dadurch gekennzeichnet, dass** die Sensorik (6) einen Profiltiefensensor aufweist.

9. Crawler nach Anspruch 1 oder 8, **dadurch gekennzeichnet, dass** die Sensorik (6) zumindest eine Kamera (7) mit Bildsensoren aufweist.

10. Crawler nach einem der Ansprüche 1, 8 oder 9, **dadurch gekennzeichnet, dass** die Sensorik (6) als Empfänger zumindest einen RFID-Reader zum Einlesen von Daten eines im Reifen eingebauten RFID-Transponders aufweist.

11. Crawler nach einem der Ansprüche 1 oder 8 bis 10, **dadurch gekennzeichnet, dass** die Sensorik (6) einen Empfänger zum Einlesen von Daten eines im Reifen eingebauten Innendrucksensors aufweist.

12. Crawler nach einem der Ansprüche 1 oder 8 bis 11, **dadurch gekennzeichnet, dass** die Sensorik (6) Sensoren zur Umfelderkennung, beispielsweise zumindest eine Kamera, ein Ultraschallsystem oder ein Radarsystem, aufweist.

13. Crawler nach Anspruch 1, **dadurch gekennzeichnet, dass** er eine Signalverarbeitungseinheit (9) aufweist, die von der Sensorik (6) erfasste und gespeicherte Daten auswertet.

14. Crawler nach Anspruch 1, **dadurch gekennzeichnet, dass** er mit zumindest einer optischen und/oder zumindest einer akustischen Warneinrichtung ausgestattet ist.

## Claims

1. Crawler for capturing and determining state parameters or state data of vehicle tires mounted on a vehicle, with
- a vehicle chassis with at least two axles and at least three wheels or with a chain or caterpillar drive,
- a drive system (3) with at least one electric motor and a rechargeable battery pack,
- an electronic vehicle controller (4),
- a communication unit (5) for receiving data from a backend and for transmitting data to a backend,
- a sensor system (6) with receivers for receiving data from sensors installed in the tires and with sensors for capturing state parameters at the outside of the tires.

2. Crawler according to Claim 1, equipped for movement and control by means of remote control.

3. Crawler according to Claim 1 or 2, equipped for movement and control by means of FPV (First Person View) .

4. Crawler according to one of Claims 1 to 3, equipped with a unit for accurate location determination, in particular for automatic movement on the basis of location data stored in the vehicle controller (4) or received during operation.

5. Crawler according to Claim 4, **characterized in that** the unit for accurate location determination uses GPS, in particular differential GPS, location finding by means of laser, radar or camera sensors or by means of special transmitting units that operate using UWB (Ultra Wide Band) technology or BLE (Bluetooth Low Energy) technology.

6. Crawler according to Claim 1, **characterized in that** the communication unit (5) is connected to the backend via a radio connection.

7. Crawler according to Claim 1 or 6, **characterized in that** the communication unit (5) is connected to the backend via Wi-Fi, Bluetooth, LoRa or mobile telephony.

8. Crawler according to Claim 1, **characterized in that** the sensor system (6) comprises a profile depth sensor.

9. Crawler according to Claim 1 or 8, **characterized in that** the sensor system (6) comprises at least one camera (7) with image sensors.

10. Crawler according to one of Claims 1, 8 and 9, **characterized in that** the sensor system (6) comprises at least one RFID reader as a receiver for reading in data of an RFID transponder installed in the tire.

11. Crawler according to one of Claims 1 and 8 to 10, **characterized in that** the sensor system (6) comprises a receiver for reading in data of an internal pressure sensor installed in the tire.

12. Crawler according to one of Claims 1 and 8 to 11, **characterized in that** the sensor system (6) comprises sensors for environment recognition, for example at least one camera, an ultrasonic system or a radar system.

13. Crawler according to Claim 1, **characterized in that** it comprises a signal processing unit (9) that evaluates data captured and stored by the sensor system (6).

14. Crawler according to Claim 1, **characterized in that** it is equipped with at least one optical and/or at least one acoustic warning apparatus.

## Revendications

1. Crawler destiné à acquérir et déterminer des paramètres d'état ou des données d'état de pneus de véhicule montés sur un véhicule, comprenant
- un châssis à au moins deux essieux et au moins trois roues ou un train de roulement à chaîne ou à chenille,
- un système d'entraînement (3) comprenant au moins un moteur électrique et un bloc-batterie rechargeable,
- une unité de commande de véhicule électronique (4),
- une unité de communication (5) destinée à recevoir des données provenant d'un système principal et à transmettre des données à un système principal,
- un système de détection (6) comportant des récepteurs destinés à recevoir des données provenant de capteurs intégrés dans le pneu et des capteurs destinés à acquérir des paramètres d'état sur la face extérieure du pneu.

2. Crawler selon la revendication 1, équipé pour se déplacer et être commandé au moyen d'une commande à distance.

3. Crawler selon la revendication 1 ou 2, équipé pour se déplacer et être commandé par FVP (First Person View).

4. Crawler selon l'une des revendications 1 à 3, équipé d'une unité de détermination précise de position, en particulier pour un déplacement automatique sur la base de données de position stockées dans l'unité de commande de véhicule (4) ou reçues lors du fonctionnement.

5. Crawler selon la revendication 4, **caractérisé en ce que** l'unité de détermination précise de position utilise le GPS, en particulier le GPS différentiel, le positionnement au moyen de capteurs à laser, à radar ou à caméra ou des unités de transmission spéciales fonctionnant avec la technologie UWB (bande ultra-large) ou la technologie BLE (Bluetooth Basse Énergie).

6. Crawler selon la revendication 1, **caractérisé en ce que** l'unité de communication (5) est en communication avec le système principal par l'intermédiaire d'une liaison radio.

7. Crawler selon la revendication 1 ou 6, **caractérisé en ce que** l'unité de communication (5) est en liaison avec le système principal par l'intermédiaire d'une liaison Wifi, Bluetooth, LORA ou par radio mobile.

8. Crawler selon la revendication 1, **caractérisé en ce que** le système de détection (6) comporte un capteur de profondeur de profil.

9. Crawler selon la revendication 1 ou 8, **caractérisé en ce que** le système de détection (6) comporte au moins une caméra (7) dotée de capteurs d'image.

10. Crawler selon l'une des revendications 1, 8 ou 9, **caractérisé en ce que** le système de détection (6) comporte en tant que récepteur au moins un lecteur RFID destiné à lire des données provenant d'un transpondeur RFID intégré dans le pneu.

11. Crawler selon l'une des revendications 1 ou 8 à 10, **caractérisé en ce que** le système de détection (6) comporte un récepteur destiné à lire des données provenant d'un capteur de pression interne intégré dans le pneu.

12. Crawler selon l'une des revendications 1 ou 8 à 11, **caractérisé en ce que** le système de détection (6) comporte des capteurs destinés à détecter l'environnement, par exemple au moins une caméra, un système à ultrasons ou un système radar.

13. Crawler selon la revendication 1, **caractérisé en ce qu'**il comporte une unité de traitement de signaux (9) qui évalue les données détectées et stockées par le système de détection (6).

14. Crawler selon la revendication 1, **caractérisé en ce qu'**il est équipé d'au moins un dispositif d'avertissement optique et/ou d'au moins un dispositif d'avertissement acoustique.
